# FASCICULE DE BREVET EUROPEEN

(11) **EP 2 951 960 B1**
(45) Date de publication et mention de la délivrance du brevet: **29.09.2021**
(21) Numéro de dépôt: 14704856.5
(22) Date de dépôt: 29.01.2014
(51) Int. Cl.: H04L 12/46

(54) **RÉSEAU LTE DYNAMIQUE**
DYNAMISCHES LTE-NETZWERK
DYNAMIC LTE NETWORK

(30) Priorité: 30.01.2013 FR 1350780
(43) Date de publication de la demande: 09.12.2015
(73) Titulaire: ORANGE, 92130 Issy-les-Moulineaux (FR)
(72) Inventeur: REYNAUD, Laurent, F-22660 Trevou-Treguignec (FR); GOMEZ CHAVEZ, Karina, I-38122 Trento (IT); MOHAMED-RASHEED, Tinku, I-38121 Trento (IT)
(74) Mandataire: Marks & Clerk France
(86) Numéro de dépôt international: PCT/FR2014/050156
(87) Numéro de publication internationale: WO 2014/118463

(56) Documents cités:
- WO-A1-2012/070044
- US-A1- 2010 093 359
- SEBASTIAN ROHDE ET AL: "AVIGLE: A system of systems concept for an avionic digital service platform based on Micro Unmanned Aerial Vehicles", SYSTEMS MAN AND CYBERNETICS (SMC), 2010 IEEE INTERNATIONAL CONFERENCE ON, IEEE, PISCATAWAY, NJ, USA, 10 octobre 2010 (2010-10-10), pages 459-466, XP031805717, ISBN: 978-1-4244-6586-6
- DANIEL T FOKUM ET AL: "A Survey on Methods for Broadband Internet Access on Trains", IEEE COMMUNICATIONS SURVEYS, IEEE, NEW YORK, NY, US, vol. 12, no. 2, 1 avril 2010 (2010-04-01), pages 171-185, XP011334499, ISSN: 1553-877X, DOI: 10.1109/SURV.2010.021110.00060
- None

## Description

### Domaine technique

La présente invention concerne généralement les réseaux de télécommunication et en particulier un réseau de communication sans fil.

### Art antérieur et problème technique

La technologie LTE (acronyme pour l'expression anglo-saxonne «Long Term Evolution» ou Evolution à Long Terme) désigne un standard de communication sans fil, dit de quatrième génération, prévu pour permettre une transmission de données en mode paquet à très haut débit.

Les réseaux 4G basés sur la technologie LTE permettent de rapprocher le haut débit mobile du marché grand public mondial grâce aux avancées majeures en matière d'expérience utilisateur et de l'existence d'un seul standard mondial.

LTE 4G/3GPP est un standard de technologie de communication mobile et correspond à une évolution des standards GSM/UMTS (acronyme pour l'expression anglaise « Global System for Mobile communication/Universal Mobile Telecommunication System »). Le standard LTE a été développé pour augmenter la capacité des réseaux mobiles utilisant de nouvelles techniques de traitement de signal et de nouvelles techniques de modulation. Le standard LTE a été également conçu dans le but de simplifier et de modifier l'architecture du réseau en un système basé sur IP (acronyme pour «Internet Protocol» signifiant Protocole Internet), tout en réduisant significativement les temps de transfert par rapport à l'architecture 3G.

L'architecture d'un réseau de communication selon la technologie LTE est définie par un ensemble de spécifications techniques élaborées par l'organisme 3GPP. La spécification TS 36.300, intitulée « Evolved Universal Terrestrial Radio Access (E-UTRA) and Evolved Universal Terrestrial Radio Access Network (E-UTRAN); Overall description; Stage 2 » définit l'architecture du réseau d'accès.

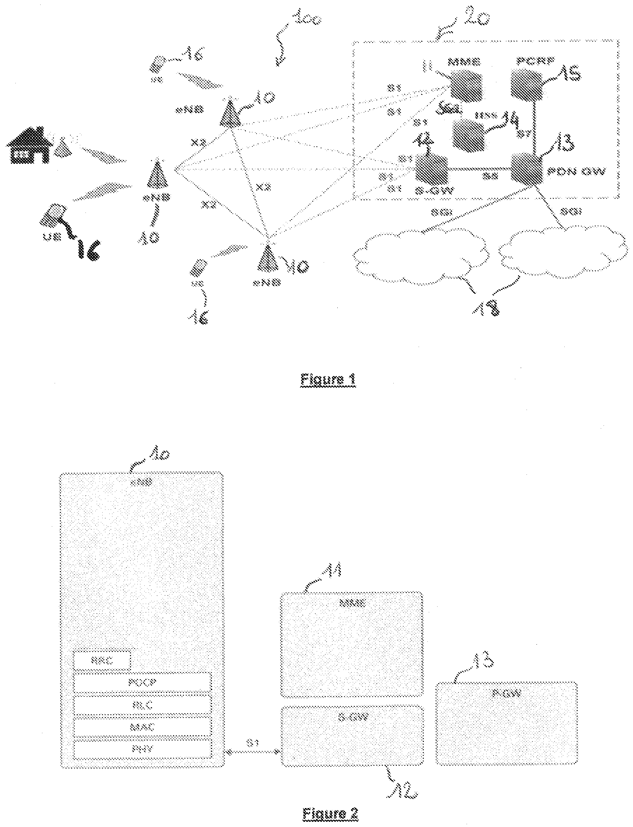

La figure 1 illustre l'architecture d'un réseau LTE classique. Comme représenté sur la figure 1, un réseau de communication LTE s'appuie sur une architecture de réseau 100 basé IP, comprenant un cœur de réseau paquet 20 appelé EPC (acronyme pour « Evolved Packet Core », expression anglaise signifiant littéralement Cœur Paquet Évolué).

De manière classique, le réseau LTE comprend :
- Une pluralité d'antennes-relais ou noeuds 10 appelées dans LTE « eNodeB » ou eNB ;
- Une entité de gestion de mobilité 11 appelée dans LTE « Mobility Management Entity » ou MME ;
- Une passerelle de rattachement 12 appelée dans LTE « Serving Gateway » ou S-GW ;
- Une passerelle 13 vers des réseaux externes 18 appelée dans LTE « Packet Data Network Gateway» ou PDN GW ;
- Une base de données centrale des abonnés 14 appelée dans LTE « Home Subscriber Server » ou HSS ;
- Un module de règles de taxation 15 appelé dans LTE « Policy and Charging Rules Function » ou PCRF.

Chaque nœud eNB 10 est responsable de la transmission et de la réception radio avec un équipement utilisateur 16 (généralement désigné par l'acronyme « UE » pour l'expression anglo-saxonne correspondante « User Equipment »). Chaque nœud eNB est un nœud unique qui communique avec un équipement utilisateur. Les équipements utilisateur 16 peuvent être mobiles. L'entité de contrôle de mobilité MME 11 est l'élément de contrôle principal de l'accès au réseau LTE. Elle est responsable de l'ensemble des procédures (authentification, chiffrement, signalisation, mobilité...) relatives aux équipements utilisateurs 16.

La passerelle de rattachement S-GW 12 route et transfère localement les paquets de données à l'utilisateur, et permet la connexion entre des réseaux LTE et d'autres réseaux 3GPP.

Lors de désastres d'origine naturelle ou dans des situations d'urgence, les pannes de l'infrastructure de télécommunications sont fréquentes. Ces pannes peuvent être liées :
- à la destruction physique de composants de réseau : ce type de panne est largement recensé et documenté pour des désastres récents. Les problèmes causés par ces destructions physiques sont souvent plus sévères et plus durables que les problèmes liés à l'interruption et à la congestion de réseau. La survenue de ce type de panne nécessite généralement la réparation ou le remplacement du système endommagé dans le réseau, ce qui peut être un processus long et particulièrement difficile lors d'une situation de désastre, pour laquelle l'accès aux équipements défaillants peut être fortement compliqué par d'autres facteurs causés par ledit désastre ;
- à une interruption de l'infrastructure de support du réseau : les réseaux de télécommunications dépendent de nombreux autres systèmes techniques locaux et régionaux afin d'assurer leur bon fonctionnement. Par exemple, dans le cas des réseaux cellulaires, l'exploitation d'un eNB est fortement dépendante de l'exploitation du cœur de réseau paquet EPC. Un autre facteur important porte sur les systèmes de distribution d'électricité, qui correspondent à la plus importante infrastructure de support pour les réseaux de télécommunications. Si les systèmes de distribution d'électricité subissent des dommages, les mécanismes électriques de secours, lorsqu'ils existent, peuvent alimenter le réseau uniquement pendant un temps limité ;
- à des perturbations dues à la congestion du réseau : de nos jours, les réseaux sociaux sont des médias très utilisés. En cas de catastrophe, la crise qui en résulte génère un besoin intense de communication et d'activités de réponses coordonnées, ainsi que de nombreux échanges pour véhiculer les informations sur les groupes et particuliers touchés. Ainsi, le trafic de télécommunications augmente significativement pendant un désastre et les situations d'urgence. Il en résulte un encombrement du réseau, causant le rejet et le blocage des appels ainsi que la perte des messages ;
- Dans le cas particulier des régions éloignées : lorsque des catastrophes et des situations d'urgence se produisent dans des zones reculées où les infrastructures de télécommunications n'existent pas, les activités de sauvetage peuvent devenir un défi en raison des difficultés de communication entre les différents groupes.

Ces événements induisent généralement un trafic important. Lors de la survenue de tels événements, les solutions existantes ne permettent pas de déployer des réseaux LTE pour permettre un accès à des moyens de communications d'urgence, ni d'augmenter temporairement la capacité pour des réseaux LTE de manière fiable.

Le document WO 2012/070044 adresse le problème consistant à fournir une architecture dans laquelle le gestionnaire relais et le dispositif d'encapsulation peut être localisé au niveau du cœur ou comme un serveur d'application ou un serveur de tunneling SI. Il fournit à cet égard un réseau de communication hiérarchique opérationnel dans une topologie de réseau mobile ou dynamique. Le réseau de communication comprend un réseau cœur, et un ensemble de nœuds comprenant au moins un nœud relais.

### Définition générale de l'invention

A cet effet, l'invention propose un réseau de communication comprenant un cœur de réseau paquet et au moins un nœud d'accès sans fil, agencé pour fournir au cœur de réseau un accès à des équipements utilisateurs par l'intermédiaire d'une première interface établie entre le nœud d'accès et un élément de réseau du cœur de réseau. Avantageusement, le réseau comprend au moins une entité de contrôle configurée pour établir une deuxième interface virtuelle transitant par son intermédiaire et reliant le nœud d'accès et l'élément de réseau et dans laquelle la première interface est encapsulée. Une entité de contrôle étant prévue dans un nœud d'accès. Une entité de contrôle comprend une entité de contrôle de liaison configurée pour contrôler les couches MAC et physique (PHY) des interfaces supportées pour communiquer avec le cœur de réseau, et pour encapsuler/désencapsuler les messages échangés entre le nœud d'accès et l'élément de réseau. L'entité de contrôle de liaison comprend un agent de contrôle d'interruptions pour contrôler les interruptions de service et les déconnexions, l'agent de contrôle d'interruptions étant conformé pour stocker en mémoire des paquets entrants dans un nœud d'accès, sélectionnés selon des règles prédéfinies, l'agent de contrôle d'interruptions étant en outre apte, en réponse au rétablissement de la liaison entre un nœud d'accès et un élément de réseau faisant suite à une interruption de service ou une déconnexion du réseau, à envoyer certains des paquets stockés en mémoire vers l'élément de réseau.

L'invention permet ainsi la prise en compte de la mobilité des nœuds d'accès eNBs au moyen d'éléments matériels additionnels, impliquant le support de nouvelles interfaces de communication dans les équipements associés entre les eNBs et le cœur de réseau EPC, et des éléments logiciels. Les nouvelles entités logicielles proposées s'appuient en particulier sur une approche de virtualisation qui constitue une solution efficace pour satisfaire les exigences du modèle dynamique pour des réseaux de communication LTE, tout en ayant un impact relativement faible sur l'architecture existante supportée par le standard LTE.

Dans une forme de réalisation de l'invention, le réseau de communication comprend une entité de contrôle dans le cœur de réseau et une entité de contrôle client dans chaque nœud d'accès. Les entités de contrôle client des noeuds d'accès peuvent ainsi prendre en charge le processus permettant de passer de la technologie LTE à n'importe quelle technologie utilisée pour la communication entre les noeuds d'accès et le cœur de réseau EPC, tandis que l'entité de contrôle du cœur de réseau prend en charge les capacités des noeuds d'accès de manière centralisée.

En particulier, l'activation de la deuxième interface virtuelle comprend l'encapsulation du message dans un paquet par l'entité de contrôle du nœud d'accès, et la transmission du paquet vers l'entité de contrôle du cœur de réseau selon une route déterminée, le paquet étant intercepté et renvoyé par chaque entité de contrôle des noeuds d'accès intermédiaires sur la route, ce qui permet le routage d'information entre les noeuds d'accès eNBs et une connexion de plusieurs eNBs à travers les interfaces, dans les situations d'urgence.

En complément, l'entité de contrôle peut comprendre un référentiel de métriques apte à stocker des métriques pour chaque nœud d'accès dans le réseau et à les mettre à jour au moyen d'échanges entre les noeuds d'accès. Les informations de réseau pour le fonctionnement de l'entité de contrôle peuvent ainsi être maintenues.

Selon une caractéristique de l'invention, l'entité de contrôle peut comprendre une entité de contrôle de routage configurée pour déterminer une route pour chaque message échangé entre un nœud d'accès et l'élément de réseau, ce qui permet de contrôler le routage et le suivi pour le réseau des noeuds d'accès eNBs.

L'entité de contrôle peut en outre comprendre une entité de contrôle de topologie agencée pour contrôler la topologie du réseau. La prise en compte de la topologie de réseau par la ou les entités de contrôle assure une mobilité des noeuds d'accès et une gestion de la topologie des noeuds d'accès dynamique et coordonnée.

L'invention permet ainsi de supporter les mécanismes DTN (acronyme pour l'expression anglo-saxonne «Delay/Disruption Tolerant Networks » signifiant Réseaux Tolérants aux Retards/Perturbations) et les mécanismes autonomes pour éviter la perte d'information et l'interruption des services.

L'entité de contrôle de liaison peut également comprendre un agent de cœur de réseau apte à substituer au moins partiellement un élément du cœur de réseau, en cas d'indisponibilité de l'élément du cœur de réseau suite à des interruptions ou des déconnexions. Cet agent de cœur de réseau permet de contrôler les interruptions temporelles que peut subir la deuxième interface virtuelle.

L'invention propose en outre un nœud d'accès sans fil ayant une zone de couverture donnée, agencé pour fournir un accès à des équipements utilisateurs se trouvant dans la zone de couverture. Le nœud d'accès est apte à se déplacer et comprend une entité de contrôle configurée pour établir une liaison entre le nœud d'accès mobile et un élément d'un réseau de communication par l'intermédiaire d'une première interface établie entre le nœud d'accès et l'élément de réseau. L'entité de contrôle FME est en outre configurée pour établir une deuxième interface virtuelle transitant par son intermédiaire et reliant le nœud d'accès et l'élément de réseau, et dans laquelle la première interface est encapsulée. Un tel nœud d'accès est adapté pour une connexion multi-interface et dynamique au cœur de réseau. Une entité de contrôle étant prévue dans un nœud d'accès. Une entité de contrôle comprend une entité de contrôle de liaison configurée pour contrôler les couches MAC et physique (PHY) des interfaces supportées pour communiquer avec le cœur de réseau, et pour encapsuler/désencapsuler les messages échangés entre le nœud d'accès et l'élément de réseau. L'entité de contrôle de liaison comprend un agent de contrôle d'interruptions pour contrôler les interruptions de service et les déconnexions, l'agent de contrôle d'interruptions étant conformé pour stocker en mémoire des paquets entrants dans un nœud d'accès, sélectionnés selon des règles prédéfinies, l'agent de contrôle d'interruptions étant en outre apte, en réponse au rétablissement de la liaison entre un nœud d'accès et un élément de réseau faisant suite à une interruption de service ou une déconnexion du réseau, à envoyer certains des paquets stockés en mémoire vers l'élément de réseau.

L'élément de réseau peut être un élément du cœur de réseau paquet du réseau de communication, tel que l'entité MME ou la passerelle S-GW.

Dans une forme de réalisation de l'invention, le nœud d'accès peut être un nœud isolé et l'élément de réseau est un autre nœud d'accès isolé du réseau de communication, ce qui permet de maintenir des services partiels dans les scénarios où des noeuds d'accès sont isolés du cœur de réseau pour une durée indéterminée due à la fragmentation du réseau.

Le nœud d'accès peut comprendre un module multi-interface configuré pour permettre la communication entre le nœud d'accès et le cœur de réseau du réseau de communication, selon une technologie adaptée.

Chaque nœud d'accès peut en outre comprendre un module de mobilité configuré pour fournir les positions du nœud mobile selon une technologie de localisation adaptée. Les noeuds d'accès peuvent ainsi être mobiles, et déployés dynamiquement dans les situations d'urgence.

L'invention propose également un procédé de déploiement d'un réseau de communication, dans une zone de couverture donnée, comprenant un cœur de réseau paquet et au moins un nœud d'accès sans fil, agencé pour fournir au cœur de réseau un accès à des équipements utilisateurs de la zone de couverture par l'intermédiaire d'une première interface établie entre le nœud d'accès et un élément de réseau du cœur de réseau. Le procédé comprend les étapes consistant à :
- prévoir au moins une entité de contrôle dans le réseau ;
- activer la liaison entre le cœur de réseau et le nœud d'accès sans fil selon la topologie du réseau ;
- créer une deuxième interface virtuelle transitant par l'intermédiaire de l'entité de contrôle, reliant le nœud d'accès et l'élément de réseau, et dans laquelle la première interface est encapsulée.

Une entité de contrôle est prévue dans un nœud d'accès. Une entité de contrôle comprend une entité de contrôle de liaison configurée pour contrôler les couches MAC et physique (PHY) des interfaces supportées pour communiquer avec le cœur de réseau, et pour encapsuler/désencapsuler les messages échangés entre le nœud d'accès et l'élément de réseau. L'entité de contrôle de liaison comprend un agent de contrôle d'interruptions pour contrôler les interruptions de service et les déconnexions, l'agent de contrôle d'interruptions étant conformé pour stocker en mémoire des paquets entrants dans un nœud d'accès, sélectionnés selon des règles prédéfinies, l'agent de contrôle d'interruptions étant en outre apte, en réponse au rétablissement de la liaison entre un nœud d'accès et un élément de réseau faisant suite à une interruption de service ou une déconnexion du réseau, à envoyer certains des paquets stockés en mémoire vers l'élément de réseau.

Un tel procédé permet de mettre en oeuvre des scénarios de déploiement dynamiques des nœuds d'accès, dans les situations d'urgence.

### Brève description des dessins

D'autres caractéristiques et avantages de l'invention apparaîtront à la lecture de la description détaillée qui suit et des figures des dessins annexés dans lesquels:
- La figure 1 est un exemple d'architecture LTE classique ;
- La figure 2 est une vue structurelle des principaux éléments du réseau LTE classique ;
- La figure 3 représente un exemple d'architecture LTE dynamique selon un mode de réalisation de l'invention ;
- La figure 4 montre l'architecture d'un nœud eNodeB selon un mode de réalisation de l'invention ;
- La figure 5 est un schéma montrant les différents composants de l'architecture dynamique selon un mode de réalisation de l'invention ;
- La figure 6 est un schéma représentant la structure de l'entité de contrôle flexible (FME) selon une forme de réalisation de l'invention ;
- La figure 7 est un schéma représentant la structure de l'unité de liaison de la FME, selon une forme de réalisation de l'invention ;
- La figure 8 est un schéma représentant un exemple de virtualisation de l'interface S1 ;
- La figure 9 montre les éléments et les interfaces de l'entité FME ;
- La figure 10 représente un exemple d'architecture dynamique selon une approche centralisée ;
- La figure 11 représente un exemple d'architecture dynamique selon une approche décentralisée ;
- La figure 12 est un schéma représentant un exemple d'architecture dynamique, selon un premier scénario ;
- La figure 13 est un organigramme représentant les étapes mises en oeuvre pour couvrir une zone sinistrée selon le premier scénario;
- La figure 14 est un schéma représentant un exemple d'architecture dynamique, selon un troisième scénario ; et
- La figure 15 est un organigramme représentant les étapes mises en oeuvre pour couvrir une zone sinistrée selon le troisième scénario.

Bien que l'homme du métier soit supposé familier des réseaux LTE, certaines notions sont rappelées ici en relation avec les figures 1 et 2 pour faciliter la compréhension de l'invention.

L'architecture LTE 100 de la figure 1 montre les interactions entre les nœuds eNB 10 et le cœur de réseau EPC 20.

Les principales interfaces supportées dans un réseau LTE comprennent :
- Une interface S1-C qui est le point de référence pour le protocole de plan de contrôle entre E-UTRAN et l'entité MME 11 ;
- Une interface S1-U dans le plan de transport qui transporte les données utilisateur entre l'eNodeB et le Serving GW 12 ;
- Une interface S5 entre la passerelle S-GW 12 et PDN-GW 13, utilisée pour réallouer les eNBs suite à la mobilité d'un équipement utilisateur 16 et lorsque la passerelle S-GW 12 a besoin de se connecter à une passerelle PDN GW 13 pour la connectivité PDN ;
- Une interface S6a qui permet le transfert de données de souscription et d'authentification pour authentifier/autoriser l'accès d'un utilisateur à un système évolué (interface AAA pour « Authentication Authorization Accounting » signifiant Authentification, Autorisation et Comptabilité) entre l'entité MME 11 et la base de données HSS ;
- Une interface SGi qui est le point de référence entre la passerelle PDN GW 13 et le réseau de paquets de données 18. Le réseau de paquets de données 18 peut être le réseau publique externe d'un opérateur ou un réseau de données de paquets privé ou encore un réseau de données de paquets intra opérateur comme par exemple un réseau pour la fourniture de services IMS (acronyme pour l'expression anglo-saxonne «IP Multimedia Subsystem » signifiant littéralement « sous-système Multimédia IP). Ce point de référence correspond à l'interface Gi pour les accès de réseau 3GPP ;
- Une interface X2 utilisée pour interconnecter les eNBs 10.

La figure 2 illustre la répartition des fonctions entre un nœud eNB 10 et les éléments du cœur de réseau EPC 200.

Chaque nœud eNB 10 met en oeuvre des couches MAC (acronyme pour « Media Access Control » signifiant contrôle d'accès aux supports), physique (PHY), RLC (acronyme pour « Radio Link Control » signifiant Contrôle de Liaison Radio) et PDCP (acronyme pour « Packet Data Control Protocol » signifiant Protocole de Contrôle de Données de Paquets) et offre des fonctionnalités de contrôle des ressources radio (RRC, acronyme pour « Radio Ressource Control »), d'admission, de QoS (acronyme pour « Quality of Service »), etc. Un eNodeB 10 dispose de l'interface S1 avec le cœur de réseau EPC 20. L'interface S1 comprend l'interface S1-C dans le plan de contrôle et l'interface S1-U dans le plan de transfert.

En outre, les eNBs adjacents utilisent entre eux l'interface X2 qui permet de minimiser la perte de paquets lors de la mobilité de l'utilisateur en mode ACTIF (« handover »). Lorsqu'un utilisateur muni d'un équipement UE 16 se déplace en mode ACTIF d'un premier eNB à un deuxième eNB, de nouvelles ressources sont allouées sur le deuxième eNB pour l'UE 16. Cependant, le cœur de réseau 20 continue de transférer les paquets destinés à l'UE 16 vers le premier eNB tant que le deuxième eNB n'a pas informé le réseau du changement. Sur cette période transitoire, le premier eNB relaie les paquets destinés à l'UE 16 sur l'interface X2 au deuxième eNB qui les remet à l'UE 16.

Des scénarios de déploiement plus dynamiques des eNB, notamment pour assurer la sécurité du public ou bien encore des communications d'urgence, nécessitent de permettre une mobilité des eNBs 10 et de gérer une topologie des eNBs dynamique et coordonnée. Par ailleurs, le fonctionnement réseau pendant de tels scénarios requiert un routage d'information entre les eNBs et une connexion de plusieurs eNBs à travers les interfaces S1.

Ainsi, l'introduction d'une topologie dynamique dans LTE 4G/3GPP pose le problème de la coopération des eNBs 10 pour traiter les problèmes relatifs aux besoins des scénarios, comme la mobilité des eNBs et les interruptions de connexion entre eNBs.

A cet effet, l'invention propose un nouveau composant LTE, appelée ci-après Entité de Contrôle de Mobilité des eNB ou FME (acronyme pour l'expression anglo-saxonne « Flexibility Management Entity » signifiant littéralement Entité de Contrôle de Flexibilité). L'entité FME selon l'invention permet une coopération efficace des eNB sans bouleverser l'architecture du réseau d'accès standard et les règles de l'infrastructure du réseau LTE. Elle permet en outre d'introduire ces nouvelles fonctions, en limitant les modifications apportées à l'architecture du réseau LTE.

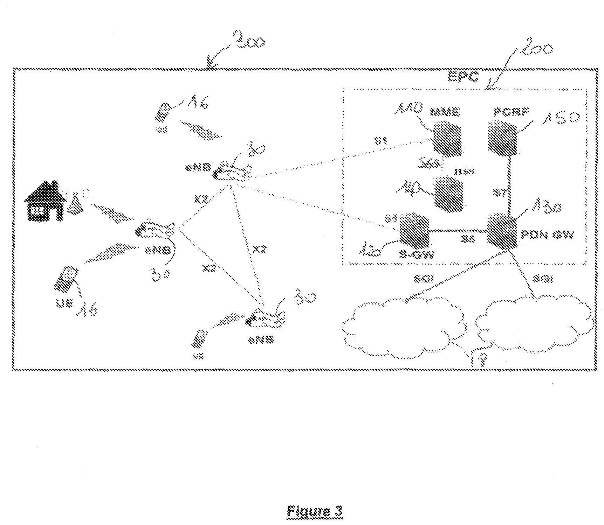

La figure 3 représente un exemple d'architecture LTE 300, selon une forme de réalisation de l'invention, qui permet de supporter la mobilité de nœuds eNBs 30. Dans cet exemple, une partie seulement des nœuds eNB sont connectés au cœur de réseau EPC 200. Ce diagramme montre que l'architecture dynamique LTE 300 constitue un environnement dynamique où un sous-ensemble de nœuds mobiles eNBs 30 dans le réseau contrôle les communications avec le cœur de réseau 200 afin de maintenir les services fournis par le cœur de réseau 200 dans le réseau LTE.

Dans un mode de réalisation particulier, ces nœuds eNB, encore appelés ci-après «Het.eNB», sont adaptés pour permettre une connexion multi-interface au cœur de réseau 200 et sont dits hétérogènes.

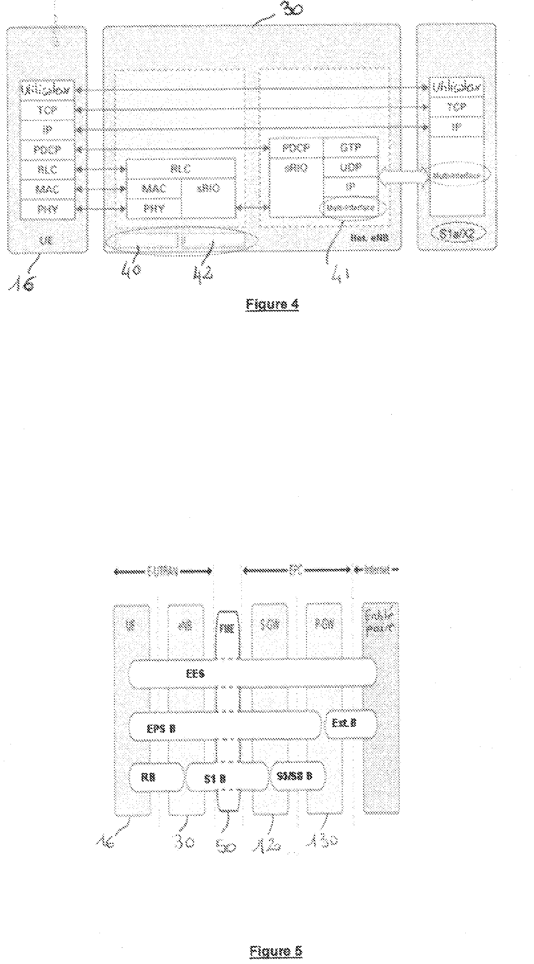

La figure 4 montre la structure d'un nœud hétérogène Het.eNB 30 selon l'invention. Un nœud Het.eNB hétérogène 30 présente avantageusement les caractéristiques suivantes qui le distinguent d'un nœud eNB classique :
- Un nœud hétérogène Het.eNB a une alimentation énergétique autonome;
- Il présente une connectivité multi-interface avec le cœur de réseau EPC 200 (802.11 technologies, WIMAX, Satellite etc.) ;
- Il est doté d'une capacité de mobilité (par exemple, mobilité aléatoire ou mobilité prédite, ou mobilité contrôlée).

En particulier, un nœud hétérogène Het.eNB 30 peut comprendre :
- Un module d'alimentation 40 configuré pour alimenter le nœud eNB en utilisant les ressources disponibles telles qu'une batterie, des panneaux solaires, une éolienne, ou toutes autres ressources équivalentes. Cette capacité d'auto-alimentation est prévue pour permettre aux nœuds Het.eNB de supporter la mobilité. Le module d'alimentation 40 est en outre conformé pour contrôler les ressources d'énergie et les communiquer à l'entité FME ;
- Un module multi-interface 41 configuré pour permettre la communication entre le nœud Het.eNB 30 et le cœur de réseau EPC 200 en utilisant une technologie adaptée comme par exemple IEEE 802.11, un lien de communication satellite ou Ethernet (interface standard) ; et
- Un module de mobilité 42 responsable de la mobilité des nœuds Het.eNB. Ce module est en outre agencé pour fournir les positions exactes des nœuds HEt.eNB en utilisant des technologies de localisation adaptées (Par exemple un système de positionnement GPS, acronyme pour Global Positioning System ou tout autre système de positionnement adapté).

L'entité FME permet d'incorporer les nœuds hétérogènes Het.eNB 30 au cœur du réseau LTE et de supporter les capacités et les mécanismes additionnels de l'architecture dynamique 300.

La figure 5 montre la structure générale de l'architecture LTE dynamique 300.

Comme cela est connu en soi, le cœur de réseau EPS (200) nécessite l'établissement d'une connexion « virtuelle» entre deux points du réseau (par exemple entre un UE 16 et une passerelle PDN-GW 130. Cette connexion virtuelle est appelée «EPS Bearer » pour support d'EPS (désigné par « EPS B » sur la figure). Par ailleurs, un support radio de données (« radio bearer » en langue anglo saxonne), désigné par RB sur la figure 5, transporte les paquets du support de l'EPS entre un équipement UE (16) et un noeud eNB (30). Un support d'interface S1, désigné par S1-B sur la figure (pour « S1 Bearer ») transporte les paquets de l'EPS entre un eNodeB (30) et une passerelle S-GW (120). Un support d'interfaces S1/S8, désigné par S1/S8-B sur la figure (pour «S1/S8 Bearer ») transporte les paquets d'un support EPS entre une passerelle S-GW (120) et une passerelle PDN-GW (130).

Selon une caractéristique de l'invention, l'architecture LTE dynamique comprend en outre une entité FME 50 qui permet aux nœuds hétérogènes Het.eNB 30 et au cœur de réseau 200 de maintenir tous les services et procédures standard du réseau LTE d'une manière transparente (« End-to-End service » signifiant service de bout en bout et désigné sur la figure par « EES »). En particulier :
- Elle permet d'intégrer les nouveaux éléments de réseau à l'implémentation standard de LTE ;
- Elle permet d'intégrer de nouveaux mécanismes de contrôle aux fonctions courantes du réseau LTE standard, tels qu'une supervision, un suivi ("tracking" en langue anglo-saxonne) et un routage du réseau des nœuds Het.eNBs ;
- Elle minimise l'impact des nouveaux éléments de réseau et mécanismes sur l'architecture LTE ;
- Elle met en oeuvre les nouvelles capacités des nœuds Het.eNB 30, en particulier la mobilité des Het.eNB et leur connectivité dynamique avec le cœur de réseau EPC 200, d'une manière entièrement transparente pour le réseau cœur ;
- Elle contrôle la connectivité dynamique entre un nœud Het.eNB 30 et le cœur de réseau EPC 200 ;
- Elle assure la mise en place d'un tunnel (encore appelée « tunnelling » selon l'expression anglo-saxonne correspondante) de l'interface S1 entre chaque nœud Het.eNB 30 et le cœur de réseau EPC 200, pour permettre le support des différents services proposés par le réseau LTE.

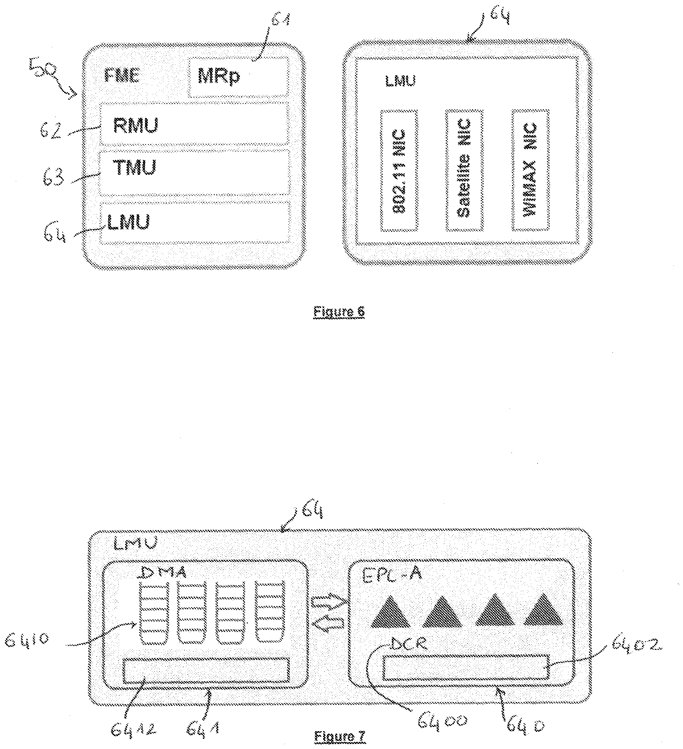

La figure 6 représente la structure de l'entité de contrôle dynamique FME 50, selon une forme de réalisation de l'invention. L'entité FME 50 peut se présenter sous la forme d'une entité logicielle et/ou matérielle hébergée sur un nœud hétérogène Het.eNB 30 ou alternativement dans le cœur de réseau 200 de l'architecture dynamique, et en particulier dans l'entité MME 110. L'entité FME 50 selon l'invention est configurée notamment pour :
- Stocker des métriques associées aux nœuds hétérogènes Het.eNB 30 ;
- Contrôler le routage entre le réseau des nœuds Het.eNB et les équipements utilisateur 16;
- Contrôler la topologie du réseau des nœuds Het.eNB ;
- Contrôler les liaisons dans le cas d'une connectivité multi-interfaces,
- Fournir des fonctionnalités de cœur de réseau et des services lorsqu'un nœud Het.eNB 30 n'a pas accès au cœur de réseau 200,
- Contrôler les liaisons pour une encapsulation des interfaces S1 selon l'interface utilisée pour communiquer avec le cœur de réseau EPC 200 (802.11, Satellite, WiMAX),
- Créer et maintenir une interface virtuelle S1a, décrite ultérieurement.

L'entité FME 50 permet de rendre transparentes les nouvelles capacités des nœuds hétérogènes 30 pour le cœur de réseau EPC 200, avec un impact minimal sur l'architecture LTE courante. En outre, les entités FME 50 selon l'invention sont agencées pour équilibrer la consommation d'énergie dans le réseau, ce qui favorise l'utilisation et prolonge la durée de vie de la solution proposée dans les déploiements dynamiques.

Comme représenté sur la figure 6, l'entité FME 50 comprend un référentiel de métriques 61, une unité de contrôle de routage 62 (désignée également par l'acronyme RMU pour l'expression anglo-saxonne correspondante « Routing Management Unit »), une unité de contrôle de topologie 63 (désignée également par l'acronyme TMU pour l'expression anglo-saxonne correspondante « Topology Management Unit »), et une unité de contrôle de liaison 64 (désignée également par l'acronyme LMU pour l'expression anglo-saxonne correspondante « Link Management Unit »).

Le référentiel de métriques 61 est configuré pour stocker les métriques de chaque nœud hétérogène 30 dans le réseau et les mettre à jour au moyen d'échanges entre les nœuds hétérogènes Het.eNB. Le référentiel de métriques 61 est en outre responsable du stockage des informations obtenues du module d'alimentation 40 et du module de mobilité 41 des nœuds hétérogènes 30 Het.eNBs. Il peut se présenter sous la forme d'un serveur d'informations de réseau pour les autres unités RMU, TMU et LMU de l'entité FME.

L'unité de contrôle de routage 62 (RMU) est configurée pour router les paquets dans le réseau, pour tout service requis pour un équipement utilisateur 16 et un nœud hétérogène Het.eNB 30, et pour maintenir les routes actives entre chaque Het.eNB dans le réseau et le Cœur de réseau EPC (200).

L'unité de contrôle de topologie 63 (TMU) est agencée pour :
- localiser chaque nœud hétérogène Het.eNB 30 dans le réseau;
- maintenir une topologie de réseau efficace pour le réseau Het.eNB;
- contrôler la séparation, en termes de distance géographique, entre les nœuds Het.eNB 30 pour éviter une interférence entre eux.

La figure 7 représente la structure de l'unité de contrôle de liaison 64 (LMU). L'unité de contrôle de liaison 64 est configurée pour contrôler les couches MAC et physique (PHY) des interfaces supportées pour communiquer avec le cœur de réseau EPC. Elle est notamment responsable de l'encapsulation ou de la désencapsulation de tous les messages échangés entre les nœuds hétérogènes 30 et le cœur de réseau EPC 200, selon la technologie disponible supportée par les nœuds Het.eNB pour communiquer avec l'EPC. Cette procédure a essentiellement pour effet de créer un tunnel entre les nœuds Het.eNB 30 et l'EPC 200. L'unité de contrôle de liaison 64 comprend ainsi les fonctions suivantes:
- Elle maintient la liaison dynamique directe entre le nœud hétérogène Het.eNB et le cœur de réseau EPC ;
- Elle effectue l'encapsulation de l'interface S1 dans l'interface virtuelle S1a et l'extraction de données de l'interface S1 encapsulées dans l'interface virtuelle S1a ;
- Elle crée et maintient une interface virtuelle S1a (établie par l'intermédiaire d'un ou de plusieurs Het.eNB, c'est-à-dire au moyen d'une connexion multi-sauts).

Selon une caractéristique de l'invention, l'entité FME 50, en particulier son unité LMU 64, est configurée pour supporter les fonctionnalités du Cœur de réseau de manière à permettre aux nœuds Het.eNBs 30 isolés d'avoir des fonctionnalités autonomes pour fournir une connectivité et des services aux utilisateurs. A cet effet, l'unité LMU 64 comprend un agent de cœur de réseau 640 appelé ci-après « EPC-A » (acronyme pour l'expression anglo-saxonne « Evolved Packet Core-Agent »). Un nœud Het.eNB isolé désigne un nœud de type Het.eNB qui, à l'instant considéré, est non connecté au cœur de réseau EPC 200.

En complément, l'unité de contrôle de liaison LMU 64 peut être adaptée pour supporter les réseaux DTN (acronyme pour l'expression anglo-saxonne «Delay/Disruption Tolerant Networks » signifiant littéralement Réseaux Tolérants aux Retards/Perturbations) et les mécanismes de calcul autonomes au moyen d'un agent de contrôle d'interruptions 641 appelé ci-après « DMA » (acronyme pour l'expression anglo-saxonne « Disruption Management Agent »).

Comme la connectivité Ethernet classique entre un nœud eNB et le Cœur de réseau EPC est remplacée selon l'invention par une connectivité multi-interface sur laquelle reposent les capacités des nouveaux nœuds hétérogènes 30, un client FME 51 peut être installé dans tout élément de réseau intervenant dans la mise en oeuvre de cette connectivité multi-interface.

La probabilité d'une interruption de liaison fréquente entre Het.eNBs-Het.eNBs et Het.eNBs-EPC peut être plus ou moins importante dans certains scénarios, en fonction :
(i) du type de mobilité des nœuds eNBs ;
(ii) de la connectivité sans fil entre les nœuds hétérogènes (Het.eNBs- Het.eNBs) d'une part, et chaque nœud hétérogène et le Cœur de réseau EPC (Het.eNBs - EPC) ;
(iii) des changements non prédictibles sur les conditions des canaux.

L'interface virtuelle S1a prévue selon l'invention peut alors subir une interruption temporelle affectant le fonctionnement normal du réseau. Pour cela, des mécanismes sont introduits dans chaque entité FME 50 tels que le mécanisme DTN et des mécanismes autonomes pour éviter la perte d'information et donc l'interruption des services. Ces mécanismes sont supportés par l'agent de contrôle d'interruption DMA 641 de l'unité LMU 64.

Toutefois, il peut être difficile de prédire la durée de l'interruption ou de la déconnexion en raison de facteurs multiples qui peuvent affecter la stabilité des liaisons dans les réseaux mobiles. Dans de tels scénarios, le nœud Het.eNB 30 est isolé du Cœur de réseau EPC 200 pour une durée indéterminée due à la fragmentation du réseau. Dans l'architecture classique LTE, plusieurs fonctionnalités dans le réseau sont supportées par le cœur de réseau EPC, ces fonctionnalités garantissant un ensemble de services importants qui, dans des scénarios particuliers, ne sont pas totalement requis.

Avantageusement, l'unité LMU 64 décide selon (i) la durée des interruptions ou déconnexions et (ii) les ressources disponibles dans les nœuds Het.eNBs 30 en termes de mémoire, de puissance disponible et de capacités, l'approche la plus efficace pour supporter le mécanisme DTN au moyen de l'agent EPC-A 640 ou de l'agent DMA 641 pour garantir le bon fonctionnement du réseau LTE dynamique. En particulier, dans le cas où le nœud Het.eNB subit de longues interruptions ou déconnexions, l'agent EPC-A 640 supporté par le mécanisme de l'agent DMA 641 est activé pour supporter le mécanisme DTN et maintenir des fonctionnalités spécifiques et des services. Dans le cas où le Het.eNB 30 subit de courtes interruptions ou déconnexions, le mécanisme de l'agent DMA 641 est activé pour supporter le mécanisme DTN.

En particulier, l'agent DMA 641 interagit avec l'unité LMU 64 pour classifier les paquets entrants selon des règles prédéfinies (par exemple en fonction de la durée de vie du paquet ou TTL, acronyme pour l'expression anglo-saxonne « Time To Live ») et selon le type de paquet (par exemple des paquets de services, de signalisation, de routage), et pour déterminer à partir de cette classification si le paquet doit être stocké dans une mémoire tampon spécifique 6410 (« buffer » en langue anglo-saxonne) ou détruit immédiatement.

L'agent DMA 641 peut comprendre un gestionnaire de mémoire tampon 6412 pour contrôler l'état des paquets à l'intérieur des différentes mémoires tampons, déterminer si les paquets ont un TTL expiré ou des fonctionnalités obsolètes, et le cas échéant rejeter de tels paquets. Le gestionnaire 6412 est notamment responsable de l'espace de mémoire tampon local 6410 selon les ressources mémoire disponibles du nœud Het.eNB. L'agent DMA 641 est de plus configuré pour classer et affecter des priorités aux paquets qui doivent être détruits lorsque toutes les ressources mémoire ont été utilisées. Il est également adapté pour envoyer ou renvoyer les paquets selon certaines règles de priorité à l'interface virtuelle S1a dès que la liaison Het.eNB - Het.eNB ou Het.eNB-EPC est rétablie ou qu'un nouveau chemin d'accès à l'EPC 200 est trouvé par l'unité de routage RMU 62.

L'agent EPC-A 640 réside dans l'unité LMU 64 et est configuré pour contrôler tous les mécanismes mis en place pour soutenir les fonctionnalités de base des nœuds Het.eNB isolés 30 suite à la fragmentation de réseau (ou à l'effondrement du cœur de réseau EPC 200). L'agent EPC-A 640 interagit avec la LMU 64 et l'agent DMA 641 pour garantir le bon fonctionnement des nœuds Het.eNB lorsque des interruptions ou des déconnexions surviennent avec l'EPC. L'agent EPC-A 641 comprend un référentiel de code dynamique 6400 qui est utilisé comme un environnement d'exécution de code protégé, dans lequel des petites fonctions peuvent être exécutées lorsque les mécanismes DMA sont insuffisants (en particulier, lorsque la durée de l'interruption est supérieure à un seuil donné, nécessitant des mises à jour du service par le cœur de réseau EPC 200) pour garantir le bon fonctionnement des Het.eNBs isolés. Cette technique garantit que, si un serveur spécifique dans le cœur de réseau 200 est temporairement indisponible suite à des interruptions ou des déconnexions, par exemple de haut niveau, comme le centre de service de message court (SMSC acronyme pour « Short Message Service Center ») ou de bas niveau comme par exemple AAA, l'EPC-A 640 exécute une fonction capable d'agir, pendant la période d'interruption, comme un serveur de substitution. L'agent EPC-A 641 comprend en outre un gestionnaire de référentiel 6402 chargé de contrôler le référentiel de code dynamique 6400.

Cette approche autonome est importante et complète les mécanismes DTN dans le cas où il ne peut pas fournir les bonnes solutions pour les problèmes d'interruption ou de déconnexion. En particulier, cet agent EPC-A 640:
- Interagit avec l'unité LMU 64 pour déterminer les fonctions spécifiques à exécuter pour garantir le bon fonctionnement des nœuds isolés Het.eNB 30 ;
- Affecte des priorités aux fonctionnalités à exécuter pour l'agent EPC-A 640 selon les scénarios requis et les ressources disponibles des nœuds Het.eNBs isolés ;
- Rétablit toutes les fonctions du cœur de réseau EPC dès qu'un nouveau chemin d'accès à l'EPC est trouvé par l'unité RMU 62 et effectue un transfert pour toutes ces fonctions.

Les nœuds Het.eNB peuvent ainsi être déployés en situation géographiquement isolée, coupée du réseau cœur EPC 200 et tout en étant capables de fonctionner de manière autonome grâce à l'emploi des fonctions DMA 641 et/ou EPC-A 640 résidant toutes deux dans l'unité LMU 64 du Het.eNB.

Il est à noter que la complexité de l'agent EPC-A 640 dépend du nombre de fonctionnalités du cœur de réseau EPC qu'il exécute.

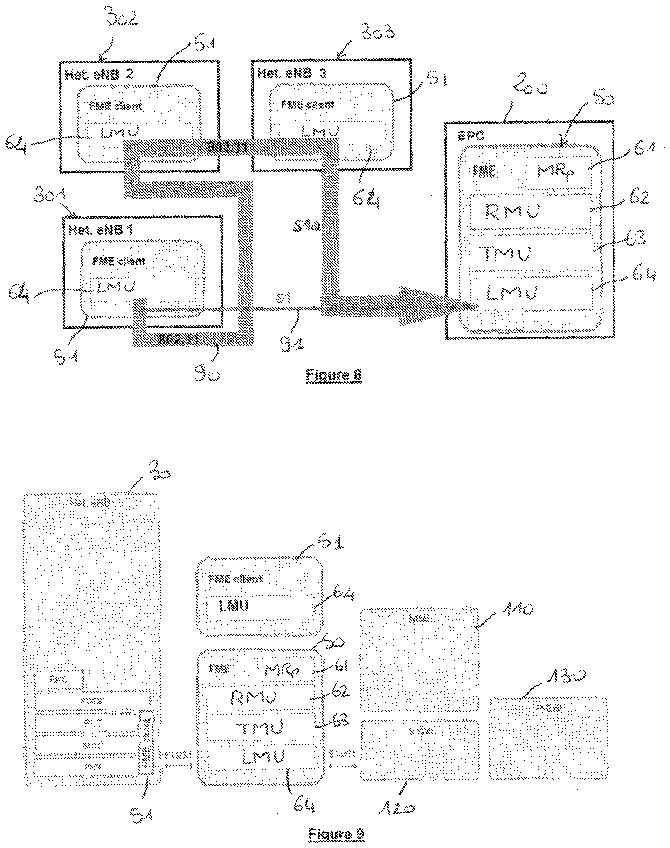

La figure 8 représente un exemple de virtualisation de l'interface S1 entre un nœud Het.eNB 1 (désigné par la référence 301) et le cœur de réseau 200. La flèche 90 représentée sur la figure 8 indique la route multi-sauts suivie par l'interface S1a pour atteindre le cœur de réseau 200. L'interface virtuelle S1a route toutes les informations de l'interface S1 représentée par la flèche 91 à travers les unités LMU 64 des nœuds Het.eNB 1 (301), Het.eNB 2 (302), Het.eNB 3 (303) jusqu'à atteindre l'unité FME 50 dans le cœur de réseau 200. Avantageusement, l'unité LMU 64 du Cœur de réseau 200 encapsule l'interface S1 conformément à la technologie disponible dans le nœud Het.eNB, comme par exemple le standard 802.11 dédié aux réseaux sans fil.

La figure 9 montre la structure de différents éléments d'un exemple d'architecture dynamique, ainsi que les interfaces S1 et S1a. L'architecture de la figure 9 comprend un client FME 51 implanté dans un nœud Het.eNB 30, un client FME 51 implanté à l'extérieur du Het.eNB, et une entité FME complète 50. Un client FME 51 (noté « FME_{c} ») est une version réduite du FME 50. Il supporte toutes les capacités de l'unité LMU 64. Le client FME 51 est en communication permanente avec les unités RMU 62 et TMU 63 de l'entité FME 50 pour la maintenance de topologie et de routage. Le Client FME est ainsi une sorte de couche de convergence entre les technologies : il prend en charge tout le processus permettant de passer de la technologie LTE à n'importe quelle technologie utilisée pour la communication entre le nœud Het.eNB 30 et le cœur de réseau EPC 200. L'interface S1a est une interface virtuelle permettant de connecter le nœud isolé Het.eNB avec l'entité MME 110 dans le plan de contrôle ou avec la passerelle de rattachement S-GW 120 dans le plan de transfert. L'interface S1 est encapsulée dans l'interface S1a pour permettre le support d'autres interfaces qu'Ethernet et une connexion multi-sauts avec le réseau cœur 200.

Dans les formes de réalisation de l'invention décrites ci-avant, l'unité LMU 64 des clients FME 51 n'a pas une fonctionnalité de routage. La route pour S1a est fournie par l'unité RMU 62 de l'entité FME 50 du cœur de réseau EPC 200 pour chaque nœud hétérogène Het.eNB. Toutefois, l'unité LMU 64 des clients FME 51 connaît le saut suivant sur la route. Le positionnement physique de l'entité FME 50 est choisi selon les ressources des nœuds hétérogènes Het.eNB. En particulier, l'entité FME 50 peut être localisée dans le cœur de réseau 200 pour avoir une approche centralisée, selon une première forme de réalisation de l'invention. Dans une deuxième forme de réalisation de l'invention, l'entité FME 50 peut être située dans les nœuds hétérogènes Het.eNB 30 selon une approche décentralisée.

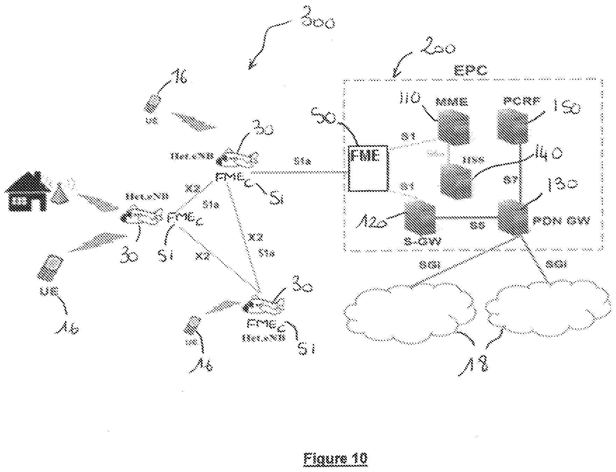

Il est fait référence à la figure 10 qui représente un exemple d'architecture dynamique selon la première forme de réalisation de l'invention (approche centralisée).

Dans cette forme de réalisation, l'entité FME 50 prend en charge les capacités des nœuds hétérogènes Het.eNB 30, de manière centralisée. Toutes les informations sont collectées dans l'EPC 200 pour supporter l'ensemble des fonctionnalités de la FME 50. L'architecture comprend en outre un ensemble de clients FME 51 dans chaque nœud hétérogène Het.eNB tandis qu'une entité unique FME 50 est installée dans le cœur de réseau EPC 200. Ainsi, plusieurs clients FME 51 existent dans le réseau des nœuds hétérogènes Het.eNB 30.

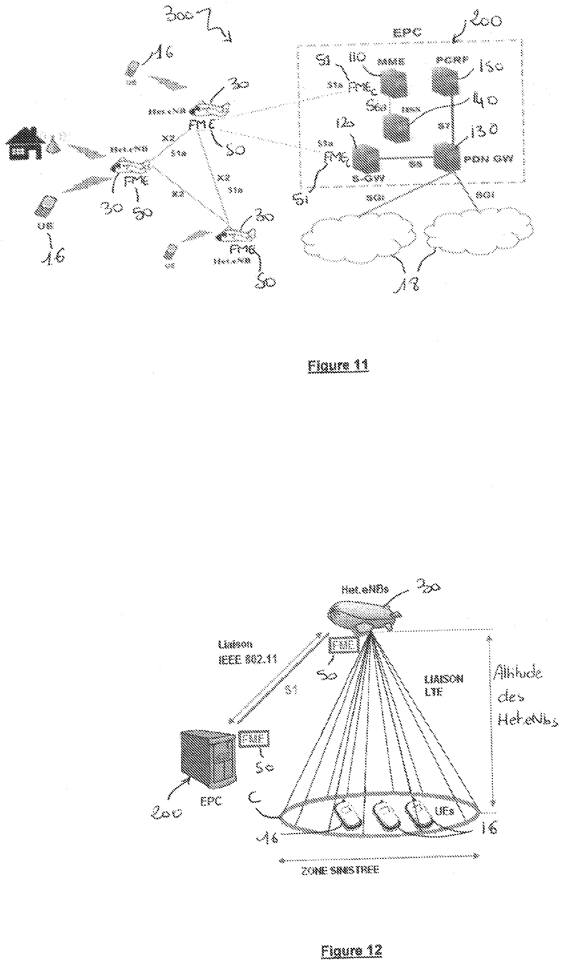

La figure 11 représente un exemple d'architecture dynamique selon la deuxième forme de réalisation de l'invention (approche centralisée).

Dans cette deuxième forme de réalisation de l'invention, le réseau comprend ainsi plus d'une entité FME 50 qui prennent en charge les capacités des nœuds hétérogènes Het.eNB 30, de manière décentralisée. Toutes les informations sont collectées au niveau de chaque nœud Het.eNB 30 pour supporter les fonctionnalités de la FME 50 qui y est installée. Par ailleurs, dans cette forme de réalisation, un client FME 51 (noté « FME_{c} ») est prévu dans le cœur de réseau 200 tandis que de multiples FME 50 sont prévues dans le réseau de nœuds hétérogènes 30.

Pour faciliter la compréhension de l'invention, le terme « FME » et la référence 50 seront utilisés pour désigner à la fois les entités FME et FME client dans la suite de la description. L'homme du métier comprendra toutefois que selon le cas, l'un ou l'autre des premier et deuxième mode de réalisation peut s'appliquer. Ainsi, lorsqu'une entité FME centrale est prévue dans le réseau cœur 200, des FME clients sont installés dans les nœuds Het.eNB 30, et lorsqu'une entité FME est prévue dans chaque nœud HEt.eNB, un FME client est prévu dans le réseau cœur dans une approche décentralisée.

L'invention permet ainsi au réseau LTE4G/3GPP de fonctionner dans des environnements dynamiques et exposés aux perturbations, et de supporter notamment les nouvelles capacités suivantes :
- le contrôle de la mobilité des nœuds eNB ;
- La flexibilité de la connectivité entre les nœuds eNB et le cœur de réseau EPC (200) ;
- Le routage et le suivi pour un réseau composé de nœuds mobiles eNBs ;
- Le maintien transparent des nouvelles capacités des nœuds Het.eNB, notamment la mobilité des nœuds Het.eNB 30 et leur connectivité multi-interface avec le cœur de réseau EPC 200
- l'encapsulation de l'interface S1 entre chaque Het.eNB et l'EPC, c'est-à-dire le tunneling de tous les services pris en charge par l'architecture LTE ;
- La prise en charge des mécanismes DTN par l'Agent DMA 641 pour LTE dans un environnement dynamique.
- La prise en charge de la communication émanant des nœuds Het.eNBs dans les scénarios de fragmentation de réseau à travers l'EPC-A 640 ;
- La garantie d'un ensemble spécifique de services critiques, même si le nœud Het.eNB est complètement déconnecté du cœur EPC 200 ;
- La facilité d'intégration de nouveaux éléments de réseau dans une architecture standard des réseaux LTE.

Ces capacités peuvent être mises en œuvre, selon l'invention, sans que cela n'entraîne de bouleversement majeur sur l'architecture de réseau LTE classique pour supporter ces nouvelles capacités. En outre, les nouveaux éléments (FME, LMU, RMU, etc.) ont un impact minimal sur l'architecture LTE classique. De nouvelles capacités aux enjeux importants peuvent être ainsi supportées à moindre coût. Elle rend en outre possible l'intégration des mécanismes de contrôle, suivi et routage pour le réseau mobile des nœuds Het.eNB avec la configuration de réseau standard LTE.

Bien que non limitée à de telles applications, l'invention présente un intérêt particulier pour le déploiement de réseaux large bande 4G/3GPP LTE pour les communications d'urgence, ainsi que pour une augmentation temporaire de capacité pour des réseaux LTE, lors de la survenue d'événements spécifiques induisant un trafic applicatif important. De même, l'invention permet d'envisager, grâce aux capacités de fonctionnement autonome d'un point de vue énergétique des Het.eNB, de mettre en place une couverture LTE fiable et insensible aux éventuelles défaillances du réseau électrique global.

La suite de la description sera faite en référence à des scénarios de communication d'urgence, à titre d'exemple non limitatif, pour illustrer le procédé de création et de maintenance d'une interface virtuelle S1 pour une unité FME 50.

La figure 12 représente un premier scénario relatif à une architecture de réseau LTE dynamique pour un seul nœud Het.eNB. Dans ce scénario, un seul nœud Het.eNB 30 est déployé dans la zone sinistrée pour fournir des services complets aux utilisateurs. Le nœud Het.eNB est équipé d'une entité FME notée FME(1). Une entité FME complémentaire (FME complète ou FME client selon l'approche choisie) est également prévue dans le cœur de réseau EPC. L'entité FME de l'EPC est notée FME(2).

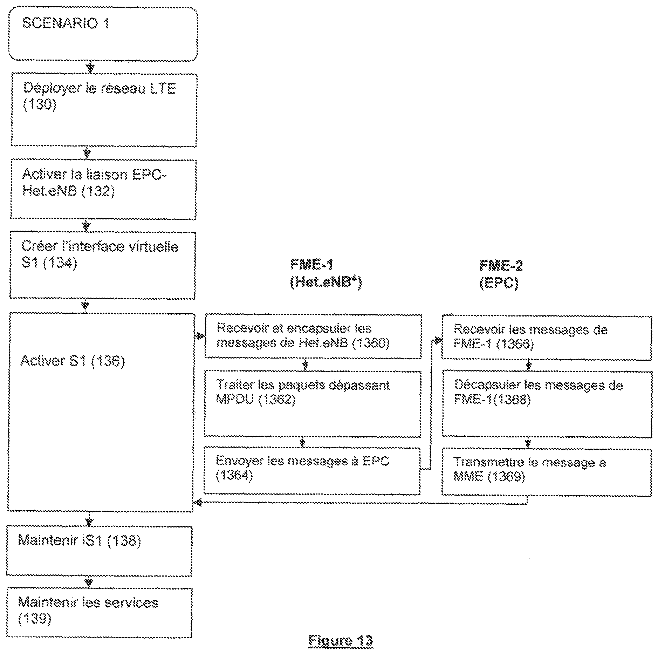

La figure 13 représente le procédé mis en oeuvre pour maintenir les services, selon ce premier scénario.

A l'étape 130, le réseau LTE est déployé dans la zone sinistrée. Afin de fournir tous les services pour la zone de couverture, le réseau comprend une unité MME 110 avec une interface sans fil. Par exemple, une unité MME munie d'une interface IEEE 802.11 et un nœud Het.eNB 30 munis de deux interfaces sans fil LTE et IEEE 802.11 sont déployés.

A l'étape 132, le lien est ensuite activé entre le cœur de réseau 200 et le nœud Het.eNB 30 (liaison EPC-Het.eNB) pour les communications : l'entité FME(1) 50 établit la liaison de communication entre le nœud Het.eNB 30 et le cœur de réseau EPC 200 (création d'une liaison point à point). L'entité FME(1) 50, en particulier son unité LMU (64), configure les interfaces IEEE 802.11 en mode Ad-Hoc et choisit la puissance de transmission appropriée pour les interfaces IEEE 802.11 dans l'EPC 200 et le nœud Het.eNB, selon la distance entre les deux composants.

A l'étape 134, l'interface virtuelle est créée : une fois établie la liaison EPC-Het.eNB, l'unité LMU 64 crée l'interface virtuelle de S1. En particulier, l'unité LMU 64 définit tous les paramètres requis pour l'encapsulation avec la norme IEEE 802.11, et pour tout le trafic venant de LTE à EPC et vice versa. Les principaux paramètres requis comprennent l'adresse d'identification de l'interface IEEE 802.11 dans le nœud Het.eNB 30 et l'EPC 200, ainsi que la longueur de paquet maximale permise par la norme IEEE 802.11 (MPDU).

A l'étape 136, l'interface virtuelle S1a est opérationnelle. Lorsque le nœud Het.eNB doit se connecter à l'EPC 200, les étapes suivantes sont effectuées :
a. Les messages provenant du nœud Het.eNB 30 à acheminer sur l'interface S1 sont vérifiés et encapsulés dans un paquet standard IEEE 802.11 (étape 1360 par l'entité FME(1)) ;
b. Si le message est plus grand que la longueur maximale autorisée MPDU, l'entité FME (1) contrôle la fragmentation/l'agrégation du message (étape 1362);
c. L'unité LMU 64 transmet ensuite le message à l'EPC 200 selon la procédure des standards de couche MAC de IEEE 802.11 (étape 1364);
d. Lorsque l'entité EPC reçoit le message (étape 1 366), et plus précisément l'entité FME(2), l'entité FME(2) désencapsule le message du paquet standard IEEE 802.11 (étape 1368), et le délivre à l'entité MME 110 (étape 1369).

A l'étape 138, l'interface virtuelle S1a est supervisée : l'unité TMU 63 contrôle la disponibilité de la liaison Het.eNB- EPC pour garantir l'interface S1.

A l'étape 139, les services sont maintenus. L'interface S1 étant disponible, des services complets peuvent être fournis dans la zone de couverture.

Dans un deuxième scénario relatif à une architecture de réseau LTE dynamique pour un nœud Het.eNB isolé, le nœud du premier scénario n'est pas relié au réseau EPC : des services partiels sont fournis tels que des appels et des messages textuels entre les utilisateurs qui se trouvent dans la zone de couverture du nœud Het.eNB 30. Ces services sont maintenus en utilisant les capacités de l'agent EPC-A 640 implémenté dans l'unité LMU 64.

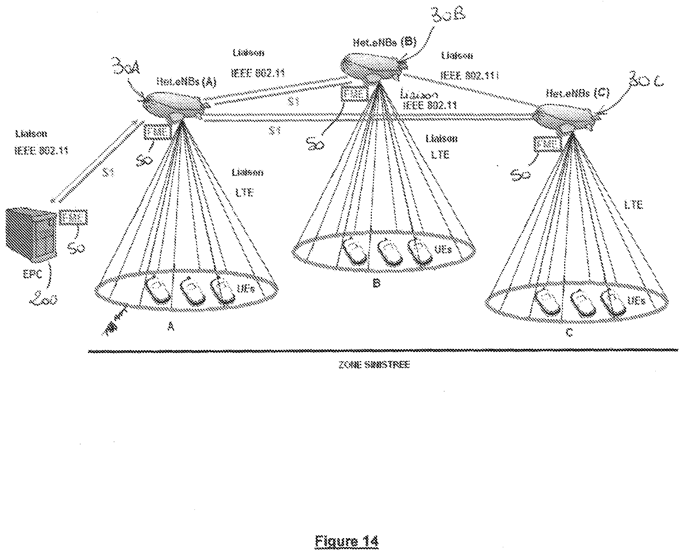

La figure 14 représente un troisième scénario relatif à une architecture de réseau LTE dynamique pour une pluralité de nœuds Het.eNB 30. Dans ce scénario, plusieurs nœuds Het.eNBs sont déployés dans la zone sinistrée pour fournir des services complets aux utilisateurs. La figure 14 montre en particulier, un premier nœud HEt.eNB désigné par la référence 30A, ayant une zone de couverture A, un deuxième nœud HEt.eNB désigné par la référence 30B, ayant une zone de couverture B, et un troisième nœud HEt.eNB désigné par la référence 30C et ayant une zone de couverture C. Les nœuds Het.eNB sont reliés deux à deux au moyen d'un lien IEEE 802.11.

Chaque nœud Het.eNB est équipé d'une entité FME notée FME(1). Une entité FME complémentaire (FME complète ou FME client selon l'approche choisie) est également prévue dans le cœur de réseau EPC. L'entité FME de l'EPC est notée FME(2)

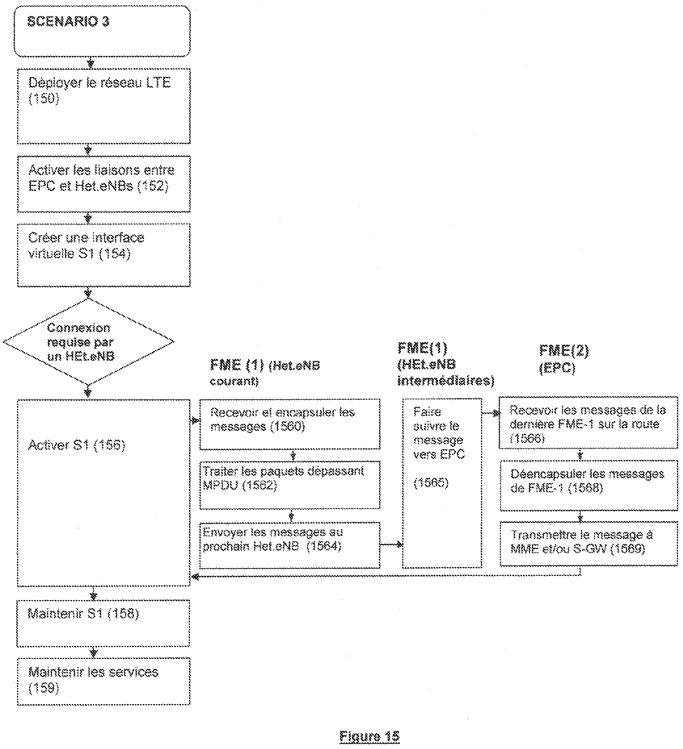

La figure 15 représente le procédé mis en oeuvre pour maintenir les services, selon ce troisième scénario.

A l'étape 150, le réseau est déployé dans la zone sinistrée. Afin de fournir tous les services pour la zone de couverture, le réseau comprend une unité MME 110 avec une interface sans fil. Par exemple, une unité MME munie d'une interface IEEE 802.11 et les nœuds Het.eNB 30A, 30B et 30C, munis chacun de deux interfaces sans fil LTE et IEEE 802.11, sont déployées.

A l'étape 152, les liaisons sont ensuite activées entre le cœur de réseau 200 et chaque nœud Het.eNB 30A, 30B et 30C. L'entité FME 50 établit la liaison de communication entre les nœuds Het.eNB 30A, 30B et 30C et le cœur de réseau EPC 200 (création d'une liaison point à point), selon la topologie du réseau. Dans l'exemple de la figure 14, la topologie est une topologie multi-sauts composée de liaisons point à point : le nœud 30A est à un saut de l'EPC 200, les nœuds 30B et 30C sont à deux sauts de l'EPC 200, le nœud 30A agissant comme relais entre l'EPC 200 et les nœuds 30B/30C. Les liaisons sont ainsi activées entre l'EPC 200 et le nœud 30A, entre le nœud 30A et le nœud 30B, et entre le nœud 30A et le nœud 30C. L'entité FME 50, en particulier son unité LMU (64), configure les interfaces IEEE 802.11 en mode Ad-Hoc et choisit la puissance de transmission appropriée pour les interfaces IEEE 802.11 dans l'EPC 200 et chaque nœud Het.eNB, selon la distance entre les deux composants.

A l'étape 154, une interface virtuelle S1a est créée : une fois établie les liaisons entre l'EPC et les nœuds Het.eNBs (30A, 30B, 30C), l'unité LMU 64 crée l'interface virtuelle de S1. En particulier, l'unité RMU 62 crée les routes partant de chaque nœud Het.eNB vers l'EPC, et notifie à l'unité LMU 64 ces routes. Les routes peuvent être créées en utilisant des protocoles de routage MANET (acronyme pour « Mobile Ad hoc NETworks ») standards ou en variante des protocoles spécifiques. En outre, l'unité LMU 64 définit tous les paramètres requis pour l'encapsulation avec la norme IEEE 802.11. Les principaux paramètres requis comprennent l'adresse d'Identification de l'interface IEEE 802.11 dans le nœud Het.eNB 30 et l'EPC 200, ainsi que la longueur de paquet maximale autorisée par la norme IEEE 802.11 (MPDU).

A l'étape 156, l'interface virtuelle S1a est opérationnelle. Cette étape comprend les étapes suivantes, lorsque le nœud Het.eNB communique avec l'EPC 200 :
a. Les messages provenant d'un nœud Het.eNB 30 à acheminer sur l'interface S1 sont vérifiés et encapsulés dans un paquet standard IEEE 802.11 par l'entité FME du nœud Het.eNB considéré (étape 1560) ;
b. Si le message est plus grand que la longueur maximale autorisée MPDU, l'entité FME du nœud HEt.eNB met en oeuvre la fragmentation/l'agrégation du message (étape 1562);
c. L'unité LMU 64 du nœud Het.eNB transmet ensuite le message au prochain saut de la route (par l'intermédiaire d'un autre Het.eNB le cas échéant) selon la procédure des standards de couche MAC de IEEE 802.11 (étape 1564);
d. Si le prochain élément de la route correspond à un autre nœud Het.eNB, l'unité LMU de ce nœud fait suivre le message vers l'EPC, conformément à la route déterminée (étape 1565) ;
e. Lorsque l'entité EPC reçoit le message (1566), et plus précisément son entité FME 50, l'entité FME de l'EPC décapsule le message du paquet standard IEEE 802.11 (1568), et le délivre à l'entité MME 110 ou à la passerelle S-GW 120 (étape 1569).

A l'étape 158, l'interface virtuelle S1a est supervisée : l'unité TMU 63 contrôle la disponibilité de chaque liaison Het.eNB- EPC pour garantir l'interface S1, tandis que l'unité RMU 62 met à jour et maintient en permanence les routes.

A l'étape 159, les services sont maintenus : l'interface S1 étant disponible, des services complets peuvent être fournis dans la zone de couverture.

Dans un quatrième scénario relatif à une architecture de réseau LTE dynamique pour une pluralité de nœuds Het.eNB 30 isolés, aucun nœud du troisième scénario n'est relié au réseau EPC 200. Une interface virtuelle S1a est maintenue entre les nœuds hétérogènes 30A, 30B et 30C pour les unités LMU 64. Dans la mesure où ce scénario ne suppose pas de connectivité, même intermittente, avec un cœur de réseau EPC 200, cette approche est décentralisée pour éviter un fonctionnement non dégradé. L'unité RMU 62, implantée dans les FME des nœuds Het.eNB 30A, 30B et 30C, est chargée de créer les routes entre les nœuds. Ces interfaces virtuelles S1a sont utilisées pour fournir des services partiels dans la zone de couverture.

Comme dans le deuxième scénario, des services partiels sont fournis tels que des appels et des messages textuels entre les utilisateurs qui se trouvent dans la zone de couverture des nœuds Het.eNB 30A, 30B et 30C. Ces services sont maintenus en utilisant les capacités de l'agent EPC-A 640 implémenté dans l'unité LMU 64.

Les scénarios précédents peuvent également être combinés.

L'invention n'est pas limitée aux modes de réalisation décrits ci-avant à titre d'exemple non limitatif. Elle englobe toutes les variantes de réalisation qui pourront être envisagées par l'homme du métier. En particulier, l'invention n'est pas limitée aux scénarios décrits à titre d'exemple, et peut inclure une combinaison de ces scénarios ou encore d'autres scénarios. En outre, l'invention n'est pas limitée aux applications décrites. Elle peut notamment s'appliquer dans différentes phases pendant ou après un désastre ou une situation d'urgence telles que:
- Une phase de réponse d'urgence
- Une phase de restauration et de réparation
- Une reconstruction de l'infrastructure détruite pour un remplacement fonctionnel
- Une reconstruction pour un redéveloppement.

L'invention offre de nombreux avantages dans de telles situations, notamment :
- un déploiement dynamique : les nœuds hétérogènes Het.eNB 30 peuvent être facilement positionnés dans la zone sinistrée pour avoir plus de cellules et de zone de couverture ;
- Un déploiement incrémentiel : ce service peut-être être supporté initialement avec un seul nœud hétérogène Het.eNB puis le réseau peut s'élargir progressivement avec plusieurs nœud Het.eNBs si une couverture et/ou de capacités additionnelles sont nécessaires ;
- un faible coût : un petit ensemble de nœud Het.eNBs s'avère moins coûteux qu'une solution par satellite géostationnaire ; en outre, un réseau de Het.eNBs s'avère moins coûteux que le déploiement d'un réseau terrestre ayant un grand nombre de stations de base ;
- une flexibilité pour répondre aux besoins du trafic : la prise en compte de la mobilité des eNBs permet, en fonction des besoins des cas d'usages considérés, d'adapter la couverture radio des eNBs par simple déplacement géographique des eNBs. Dans le cas où les eNBs sont déployés sur des plateformes aériennes, ces eNBs peuvent par exemple disposer d'une couverture radio au sol plus importante en prenant simplement de l'altitude et diminuer cette couverture radio en perdant de l'altitude. Cette approche de variation de la couverture radio par déplacement géographique des eNBs vient en complément d'approches traditionnelles (par exemple via la variation des gains de transmission sur les antennes des eNBs ou l'utilisation d'antennes évoluées de type « smart antennas », capables d'adapter leur couverture radio au sol) et apporte un élément de flexibilité supplémentaire ; et
- Un déploiement rapide : Pour une architecture de réseau donné, il est possible de déployer un nouveau nœud Het.eNB relativement rapidement.

L'homme du métier comprendra que l'entité FME ainsi que ses sous-composants peuvent être mis en oeuvre de diverses façon par matériel (« hardware »), logiciel, ou une combinaison de matériel et de logiciels.

En particulier, les composants de l'unité FME peuvent être combinés ou séparés en sous-éléments pour mettre en oeuvre l'invention. En outre, ils peuvent être mis en oeuvre sous la forme de programmes d'ordinateur exécutés par un processeur. Un programme d'ordinateur est un ensemble d'instructions qui peuvent être utilisées, directement ou indirectement, par un ordinateur.

Un programme d'ordinateur peut être écrit dans n'importe quel langage de programmation, y compris les langages compilés ou interprétés, et il peut être déployé sous n'importe quelle forme dans l'environnement informatique choisi.

## Revendications

1. Réseau de communication comprenant un cœur de réseau paquet (200) et au moins un nœud d'accès sans fil (30), agencé pour fournir au cœur de réseau un accès à des équipements utilisateurs par l'intermédiaire d'une première interface établie entre le nœud d'accès et un élément de réseau (110, 120) du cœur de réseau, **caractérisé en ce que** ledit réseau comprend au moins une entité de contrôle (50, 51) configurée pour établir une deuxième interface virtuelle transitant par son intermédiaire et reliant le nœud d'accès et l'élément de réseau et dans laquelle ladite première interface est encapsulée, une entité de contrôle (50) étant prévue dans un nœud d'accès (30), une entité de contrôle (50) comprenant une entité de contrôle de liaison (64) configurée pour contrôler les couches MAC et physique (PHY) des interfaces supportées pour communiquer avec le cœur de réseau (200), et pour encapsuler/désencapsuler les messages échangés entre le nœud d'accès (30) et l'élément de réseau, l'entité de contrôle de liaison (64) comprenant un agent de contrôle d'interruptions (641) pour contrôler les interruptions de service et les déconnexions, l'agent de contrôle d'interruptions (641) étant conformé pour stocker en mémoire des paquets entrants dans un nœud d'accès, sélectionnés selon des règles prédéfinies, ledit agent de contrôle d'interruptions étant en outre apte, en réponse au rétablissement de la liaison entre un nœud d'accès et un élément de réseau (200, 30) faisant suite à une interruption de service ou une déconnexion du réseau, à envoyer certains des paquets stockés en mémoire vers ledit élément de réseau.

2. Réseau de communication selon la revendication 2, **caractérisé en ce qu'**il comprend une entité de contrôle (50) dans le cœur de réseau et une entité de contrôle client (51) dans chaque nœud d'accès.

3. Réseau de communication selon la revendication 2, **caractérisé en ce que** l'activation de la deuxième interface virtuelle comprend l'encapsulation du message dans un paquet par l'entité de contrôle (50) dudit nœud d'accès, et la transmission dudit paquet vers l'entité de contrôle du cœur de réseau (200) selon une route déterminée, le paquet étant intercepté et renvoyé par chaque entité de contrôle des nœuds d'accès intermédiaires sur la route.

4. Réseau de communication selon l'une des revendications précédentes, caractérisé en que l'entité de contrôle (50) comprend un référentiel de métriques (61) apte à stocker des métriques pour chaque nœud d'accès (30) dans le réseau et à les mettre à jour au moyen d'échanges entre les nœuds d'accès.

5. Réseau de communication selon l'une des revendications précédentes, caractérisé en que l'entité de contrôle (50) comprend une entité de contrôle de routage (62) configurée pour déterminer une route pour chaque message échangé entre un nœud d'accès (30) et ledit élément de réseau (200).

6. Réseau de communication selon l'une des revendications précédentes, caractérisé en que l'entité de contrôle (50) comprend une entité de contrôle de topologie (63) agencée pour contrôler la topologie du réseau.

7. Réseau de communication selon l'une des revendications précédentes, caractérisé en que l'entité de contrôle de liaison (64) comprend en outre un agent de cœur de réseau (640) apte à substituer au moins partiellement un élément du cœur de réseau (200), en cas d'indisponibilité dudit élément du cœur de réseau suite à des interruptions ou des déconnexions.

8. Nœud d'accès sans fil ayant une zone de couverture donnée, agencé pour fournir un accès à des équipements utilisateurs (16) se trouvant dans ladite zone de couverture, **caractérisé en ce que** ledit nœud d'accès est apte à se déplacer et **en ce qu'**il comprend une entité de contrôle (50) configurée pour établir une liaison entre ledit nœud d'accès mobile et un élément d'un réseau de communication (110, 120) par l'intermédiaire d'une première interface établie entre le nœud d'accès et ledit élément de réseau (110, 120), l'entité de contrôle FME étant en outre configurée pour établir une deuxième interface virtuelle transitant par son intermédiaire et reliant le nœud d'accès et l'élément de réseau, et dans laquelle ladite première interface est encapsulée, une entité de contrôle (50) étant prévue dans un nœud d'accès (30), une entité de contrôle (50) comprenant une entité de contrôle de liaison (64) configurée pour contrôler les couches MAC et physique (PHY) des interfaces supportées pour communiquer avec le cœur de réseau (200), et pour encapsuler/désencapsuler les messages échangés entre le nœud d'accès (30) et l'élément de réseau, l'entité de contrôle de liaison (64) comprenant un agent de contrôle d'interruptions (641) pour contrôler les interruptions de service et les déconnexions, l'agent de contrôle d'interruptions (641) étant conformé pour stocker en mémoire des paquets entrants dans un nœud d'accès, sélectionnés selon des règles prédéfinies, ledit agent de contrôle d'interruptions étant en outre apte, en réponse au rétablissement de la liaison entre un nœud d'accès et un élément de réseau (200, 30) faisant suite à une interruption de service ou une déconnexion du réseau, à envoyer certains des paquets stockés en mémoire vers ledit élément de réseau.

9. Nœud d'accès selon la revendication 8, **caractérisé en ce que** ledit élément de réseau est un élément (110, 120) du cœur de réseau paquet (200) du réseau de communication.

10. Nœud d'accès selon la revendication 9, **caractérisé en ce que** ledit nœud d'accès est un nœud isolé et **en ce que** ledit élément de réseau est un autre nœud d'accès isolé (30B, 30C) du réseau de communication.

11. Nœud d'accès selon l'une des revendications 8 à 10, **caractérisé en ce qu'**il comprend un module multi-interface (41) configuré pour permettre la communication entre le nœud d'accès (30) et le cœur de réseau (200) dudit réseau de communication, selon une technologie adaptée.

12. Nœud d'accès selon l'une des revendications 8 à 11, **caractérisé en ce que** chaque nœud d'accès comprend en outre un module de mobilité (42) configuré pour fournir les positions du nœud mobile selon une technologie de localisation adaptée.

13. Procédé de déploiement d'un réseau de communication, dans une zone de couverture donnée, comprenant un cœur de réseau paquet (200) et au moins un nœud d'accès sans fil (30), agencé pour fournir au cœur de réseau un accès à des équipements utilisateurs de la zone de couverture par l'intermédiaire d'une première interface établie entre le nœud d'accès et un élément de réseau (110, 120) du cœur de réseau, **caractérisé en ce qu'**il comprend :
- prévoir au moins une entité de contrôle (50, 51) dans le réseau ;
- activer la liaison entre le cœur de réseau (200) et le nœud d'accès sans fil selon la topologie du réseau ;
- créer une deuxième interface virtuelle transitant par l'intermédiaire de ladite entité de contrôle (50), reliant le nœud d'accès et l'élément de réseau, et dans laquelle ladite première interface est encapsulée,
une entité de contrôle (50) étant prévue dans un nœud d'accès (30), une entité de contrôle (50) comprenant une entité de contrôle de liaison (64) pour contrôler les couches MAC et physique (PHY) des interfaces supportées pour communiquer avec le cœur de réseau (200), et pour encapsuler/désencapsuler les messages échangés entre le nœud d'accès (30) et l'élément de réseau, l'entité de contrôle de liaison (64) comprenant un agent de contrôle d'interruptions (641) pour contrôler les interruptions de service et les déconnexions, l'agent de contrôle d'interruptions (641) étant conformé pour stocker en mémoire des paquets entrants dans un nœud d'accès, sélectionnés selon des règles prédéfinies, ledit agent de contrôle d'interruptions étant en outre apte, en réponse au rétablissement de la liaison entre un nœud d'accès et un élément de réseau (200, 30) faisant suite à une interruption de service ou une déconnexion du réseau, à envoyer certains des paquets stockés en mémoire vers ledit élément de réseau.

## Patentansprüche

1. Kommunikationsnetzwerk umfassend einen Paket-Netzwerkkern (200) und mindestens einen Drahtloszugangsknoten (30), der angeordnet ist, dem Netzwerkkern einen Zugriff auf Benutzergeräte mittels einer ersten Schnittstelle bereitzustellen, die zwischen dem Zugangsknoten und einem Netzwerkelement (110, 120) des Netzwerkkerns hergestellt ist, **dadurch gekennzeichnet, dass** das Netzwerk mindestens eine Steuereinheit (50, 51) umfasst, die dazu ausgebildet ist, eine zweite virtuelle Schnittstelle herzustellen, die durch sie verläuft und den Zugangsknoten und das Netzwerkelement verbindet, und wobei die erste Schnittstelle gekapselt ist, wobei eine Steuereinheit (50) im Zugangsknoten (30) vorgesehen ist, wobei eine Steuereinheit (50) eine Verbindungssteuereinheit (64) umfasst, die dazu ausgebildet ist, die MAC- und die Bitübertragungsschicht (PHY) der unterstützten Schnittstellen zu steuern, um mit dem Netzwerkkern (200) zu kommunizieren, und die Nachrichten zu kapseln/entkapseln, die zwischen dem Zugangsknoten (30) und dem Netzwerkelement ausgetauscht werden, wobei die Verbindungssteuereinheit (64) einen Unterbrechungssteuerungsagenten (641) umfasst, um die Dienstunterbrechungen und die Trennungen zu steuern, wobei der Unterbrechungssteuerungsagent (641) dazu ausgebildet ist, Pakete im Speicher zu speichern, die in einen Zugangsknoten eingehen, und die gemäß vorgegebenen Regeln ausgewählt sind, wobei der Unterbrechungssteuerungsagent ferner dafür geeignet ist, in Reaktion auf die Wiederherstellung der Verbindung zwischen einem Zugangsknoten und einem Netzwerkelement (200, 30), die auf eine Dienstunterbrechung oder eine Trennung vom Netzwerk folgt, bestimmte der Pakete, die im Speicher gespeichert sind, an das Netzwerkelement zu senden.

2. Kommunikationsnetzwerk nach Anspruch 2, **dadurch gekennzeichnet, dass** es eine Steuereinheit (50) im Netzwerkkern und eine Client-Steuereinheit (51) in jedem Zugangsknoten umfasst.

3. Kommunikationsnetzwerk nach Anspruch 2, **dadurch gekennzeichnet, dass** die Aktivierung der zweiten virtuellen Schnittstelle das Kapseln der Nachricht in einem Paket durch die Steuereinheit (50) des Zugangsknotens und das Übertragen des Pakets zur Steuereinheit des Netzwerkkerns (200) auf einer bestimmten Route umfasst, wobei das Paket von jeder Steuereinheit der Zwischen-Zugangsknoten auf der Route abgefangen und weitergesendet wird.

4. Kommunikationsnetzwerk nach einem der vorhergehenden Ansprüche, **dadurch gekennzeichnet, dass** die Steuereinheit (50) ein Bezugssystem aus Metriken (61) umfasst, das geeignet ist, Metriken für jeden Zugangsknoten (30) im Netzwerk zu speichern und sie mittels Austausch zwischen den Zugangsknoten zu aktualisieren.

5. Kommunikationsnetzwerk nach einem der vorhergehenden Ansprüche, **dadurch gekennzeichnet, dass** die Steuereinheit (50) eine Routing-Steuereinheit (62) umfasst, die dazu ausgebildet ist, eine Route für jede Nachricht zu bestimmen, die zwischen einem Zugangsknoten (30) und dem Netzwerkelement (200) ausgetauscht wird.

6. Kommunikationsnetzwerk nach einem der vorhergehenden Ansprüche, **dadurch gekennzeichnet, dass** die Steuereinheit (50) eine Topologie-Steuereinheit (63) umfasst, die angeordnet ist, die Topologie des Netzwerks zu steuern.

7. Kommunikationsnetzwerk nach einem der vorhergehenden Ansprüche, **dadurch gekennzeichnet, dass** die Verbindungssteuereinheit (64) ferner einen Netzwerkkernagenten (640) umfasst, der geeignet ist, ein Element des Netzwerkkerns (200) im Falle der Nichtverfügbarkeit des Elements des Netzwerkkerns nach Unterbrechungen oder Trennungen wenigstens teilweise zu ersetzen.

8. Drahtloszugangsknoten mit einem bestimmten Abdeckungsbereich, der angeordnet ist, einen Zugriff auf Benutzergeräte (16) bereitzustellen, die sich in dem Abdeckungsbereich befinden, **dadurch gekennzeichnet, dass** der Zugangsknoten geeignet ist, sich zu bewegen, und dadurch, dass er eine Steuereinheit (50) umfasst, die dazu ausgebildet ist, eine Verbindung zwischen dem mobilen Zugangsknoten und einem Element eines Kommunikationsnetzwerks (110, 120) mittels einer ersten Schnittstelle herzustellen, die zwischen dem Zugangsknoten und dem Netzwerkelement (110, 120) hergestellt ist, wobei die Steuereinheit FME ferner dazu ausgebildet ist, eine zweite virtuelle Schnittstelle herzustellen, die durch sie verläuft und den Zugangsknoten und das Netzwerkelement verbindet, und wobei die erste Schnittstelle gekapselt ist, wobei eine Steuereinheit (50) in einem Zugangsknoten (30) vorgesehen ist, wobei eine Steuereinheit (50) eine Verbindungssteuereinheit (64) umfasst, die dazu ausgebildet ist, die MAC- und die Bitübertragungsschicht (PHY) der unterstützten Schnittstellen zu steuern, um mit dem Netzwerkkern (200) zu kommunizieren, und die Nachrichten zu kapseln/entkapseln, die zwischen dem Zugangsknoten (30) und dem Netzwerkelement ausgetauscht werden, wobei die Verbindungssteuereinheit (64) einen Unterbrechungssteuerungsagenten (641) umfasst, um die Dienstunterbrechungen und die Trennungen zu steuern, wobei der Unterbrechungssteuerungsagent (641) dazu ausgebildet ist, Pakete im Speicher zu speichern, die in einen Zugangsknoten eingehen, und die gemäß vorgegebenen Regeln ausgewählt sind, wobei der Unterbrechungssteuerungsagent ferner dafür geeignet ist, in Reaktion auf die Wiederherstellung der Verbindung zwischen einem Zugangsknoten und einem Netzwerkelement (200, 30), die auf eine Dienstunterbrechung oder eine Trennung vom Netzwerk folgt, bestimmte der Pakete, die im Speicher gespeichert sind, an das Netzwerkelement zu senden.

9. Zugangsknoten nach Anspruch 8, **dadurch gekennzeichnet, dass** das Netzwerkelement ein Element (110, 120) des Paket-Netzwerkkerns (200) des Kommunikationsnetzwerks ist.

10. Zugangsknoten nach Anspruch 9, **dadurch gekennzeichnet, dass** der Zugangsknoten ein isolierter Knoten ist, und dadurch, dass das Netzwerkelement ein anderer isolierter Zugangsknoten (30B, 30C) des Kommunikationsnetzwerks ist.

11. Zugangsknoten nach einem der Ansprüche 8 bis 10, **dadurch gekennzeichnet, dass** er ein Mehrschnittstellen-Modul (41) umfasst, das dazu ausgebildet ist, die Kommunikation zwischen dem Zugangsknoten (30) und dem Netzwerkkern (200) des Kommunikationsnetzwerks gemäß einer geeigneten Technologie zu gestatten.

12. Zugangsknoten nach einem der Ansprüche 8 bis 11, **dadurch gekennzeichnet, dass** jeder Zugangsknoten ferner ein Mobilitätsmodul (42) umfasst, das dazu ausgebildet ist, die Positionen des mobilen Knotens gemäß einer geeigneten Lokalisierungstechnologie bereitzustellen.

13. Verfahren zum Einsatz eines Kommunikationsnetzwerks in einem bestimmten Abdeckungsbereich, umfassend einen Paket-Netzwerkkern (200) und mindestens einen Drahtloszugangsknoten (30), der angeordnet ist, dem Netzwerkkern einen Zugriff auf Benutzergeräte des Abdeckungsbereichs mittels einer ersten Schnittstelle bereitzustellen, die zwischen dem Zugangsknoten und einem Netzwerkelement (110, 120) des Netzwerkkerns hergestellt ist, **dadurch gekennzeichnet, dass** es Folgendes umfasst:
- Vorsehen mindestens einer Steuereinheit (50, 51) im Netzwerk;
- Aktivieren der Verbindung zwischen dem Netzwerkkern (200) und dem Drahtloszugangsknoten gemäß der Topologie des Netzwerks;
- Erzeugen einer zweiten virtuellen Schnittstelle, die durch die Steuereinheit (50) verläuft, die den Zugangsknoten und das Netzwerkelement verbindet, und wobei die erste Schnittstelle gekapselt ist,
wobei eine Steuereinheit (50) in einem Zugangsknoten (30) vorgesehen ist, wobei eine Steuereinheit (50) eine Verbindungssteuereinheit (64) umfasst, um die MAC- und die Bitübertragungsschicht (PHY) der unterstützten Schnittstellen zu steuern, um mit dem Netzwerkkern (200) zu kommunizieren, und die Nachrichten zu kapseln/entkapseln, die zwischen dem Zugangsknoten (30) und dem Netzwerkelement ausgetauscht werden, wobei die Verbindungssteuereinheit (64) einen Unterbrechungssteuerungsagenten (641) umfasst, um die Dienstunterbrechungen und die Trennungen zu steuern, wobei der Unterbrechungssteuerungsagent (641) dazu ausgebildet ist, Pakete im Speicher zu speichern, die in einen Zugangsknoten eingehen, und die gemäß vorgegebenen Regeln ausgewählt sind, wobei der Unterbrechungssteuerungsagent ferner dafür geeignet ist, in Reaktion auf die Wiederherstellung der Verbindung zwischen einem Zugangsknoten und einem Netzwerkelement (200, 30), die auf eine Dienstunterbrechung oder eine Trennung vom Netzwerk folgt, bestimmte der Pakete, die im Speicher gespeichert sind, an das Netzwerkelement zu senden.

## Claims

1. Communication network comprising a packet core network (200) and at least one wireless access node (30), arranged to provide the core network with access to user equipment via a first interface established between the access node and a network element (110, 120) of the core network, **characterized in that** said network comprises at least one control entity (50, 51) configured to establish a second virtual interface through it and linking the access node and the network element and in which said first interface is encapsulated, a control entity (50) being provided in an access node (30), a control entity (50) comprising a link control entity (64) configured to control the MAC and physical (PHY) layers of the interfaces supported to communicate with the core network (200), and to encapsulate/de-encapsulate the messages exchanged between the access node (30) and the network element, the link control entity (64) comprising an interruption control agent (641) for controlling the service interruptions and the disconnections, the interruption control agent (641) being adapted to store in memory incoming packets in an access node, selected according to predefined rules, said interruption control agent further being able, in response to the reestablishment of the link between an access node and a network element (200, 30) following a service interruption or a network disconnection, to send some of the packets stored in memory to said network element.

2. Communication network according to Claim 2, **characterized in that** it comprises a control entity (50) in the core network and a client control entity (51) in each access node.

3. Communication network according to Claim 2, **characterized in that** the activation of the second virtual interface comprises the encapsulation of the message in a packet by the control entity (50) of said access node, and the transmission of said packet to the control entity of the core network (200) according to a determined route, the packet being intercepted and resent by each control entity of the intermediate access nodes on the route.

4. Communication network according to one of the preceding claims, **characterized in that** the control entity (50) comprises a metric reference system (61) capable of storing metric for each access node (30) in the network and of updating them by means of exchanges between the access nodes.

5. Communication network according to one of the preceding claims, **characterized in that** the control entity (50) comprises a routing control entity (62) configured to determine a route for each message exchanged between an access node (30) and said network element (200).

6. Communication network according to one of the preceding claims, **characterized in that** the control entity (50) comprises a topology control entity (63) arranged to control the topology of the network.

7. Communication network according to one of the preceding claims, **characterized in that** the link control entity (64) further comprises a core network agent (640) capable of at least partially replacing an element of the core network (200), in case of unavailability of said element of the core network following interruptions or disconnections.

8. Wireless access node having a given coverage zone, arranged to provide access to user equipment (16) located in said coverage zone, **characterized in that** said access node is able to be moved and **in that** it comprises a control entity (50) configured to establish a link between said mobile access node and an element of a communication network (110, 120) via a first interface established between the access node and said network element (110, 120), the control entity FME being further configured to establish a second virtual interface through it and linking the access node and the network element, and in which said first interface is encapsulated, a control entity (50) being provided in an access node (30), a control entity (50) comprising a link control entity (64) configured to control the MAC and physical (PHY) layers of the interfaces supported to communicate with the core network (200), and to encapsulate/de-encapsulate the messages exchanged between the access node (30) and the network element, the link control entity (64) comprising an interruption control agent (641) for controlling the service interruptions and the disconnections, the interruption control agent (641) being adapted to store in memory incoming packets in an access node, selected according to predefined rules, said interruption control agent further being able, in response to the re-establishment of the link between an access node and a network element (200, 30) following a service interruption or a network disconnection, to send some of the packets stored in memory to said network element.

9. Access node according to Claim 8, **characterized in that** said network element is an element (110, 120) of the packet core network (200) of the communication network.

10. Access node according to Claim 9, **characterized in that** said access node is an isolated node and **in that** said network element is another isolated access node (30B, 30C) of the communication network.

11. Access node according to one of Claims 8 to 10, **characterized in that** it comprises a multi-interface module (41) configured to allow communication between the access node (30) and the core network (200) of said communication network, according to a suitable technology.

12. Access node according to one of Claims 8 to 11, **characterized in that** each access node further comprises a mobility module (42) configured to provide the positions of the mobile node according to a suitable location technology.

13. Method for the deployment of a communication network, in a given coverage zone, comprising a packet core network (200) and at least one wireless access node (30), arranged to provide the core network with access to user equipment of the coverage zone via a first interface established between the access node and a network element (110, 120) of the core network, **characterized in that** it comprises:
- providing at least one control entity (50, 51) in the network;
- activating the link between the core network (200) and the wireless access node according to the topology of the network;
- creating a second virtual interface through said control entity (50), linking the access node and the network element, and in which said first interface is encapsulated,
a control entity (50) being provided in an access node (30), a control entity (50) comprising a link control entity (64) for controlling the MAC and physical (PHY) layers of the interfaces supported to communicate with the core network (200), and to encapsulate/de-encapsulate the messages exchanged between the access node (30) and the network element, the link control entity (64) comprising an interruption control agent (641) for controlling the service interruptions and the disconnections, the interruption control agent (641) being adapted to store in memory incoming packets in an access node, selected according to predefined rules, said interruption control agent further being able, in response to the re-establishment of the link between an access node and a network element (200, 30) following a service interruption or a network disconnection, to send some of the packets stored in memory to said network element.
